# EUROPEAN PATENT APPLICATION

(11) **EP 2 325 765 A1**
(43) Date of publication of application: **25.05.2011**
(21) Application number: 10188158.9
(22) Date of filing: 20.10.2010
(51) Int. Cl.: G06F 17/30, G01S 1/00, G08G 1/00

(54) **A database system and method of obtaining and communicating data**

(30) Priority: 29.10.2009 US 608067
(71) Applicant: Delphi Technologies, Inc., Troy, MI 48007 (US)
(72) Inventor: Widmann, Glenn R., Noblesville, IN 46062 (US); Shogren, William G., Noblesville, IN 46062 (US)
(74) Representative: Denton, Michael John

(57) **Abstract**

A database system (100) and method (350) for obtaining and communicating data is provided, wherein the system (100) includes a plurality of mobile nodes (102), wherein at least a first mobile node has an environmental data collection device (104), a location determination device (106) configured to determine a geographical location that is associated with environmental data obtained by the environmental data collection device (104), and a memory device (108) configured to store the environmental data and the associated geographical location. The first mobile node further includes a processor (110), and a communication device (112) configured to transmit the environmental data and the associated geographical location to a database (114), wherein at least one of the database (114) and the processor (110) is configured to categorize the environmental data and the associated geographical location, and communicate data that is a function of the environmental data and the associated geographical location to a second mobile node of the plurality of mobile nodes (102) based upon the categorization.

## Description

### FIELD OF THE INVENTION

The present invention generally relates to a database system and method of obtaining and communicating data, and more particularly, a database system and method for obtaining and communicating data to provide environmental data that relates to a geographical location.

### BACKGROUND OF THE INVENTION

Generally, navigation map databases contain a variety of parameters that describe a roadway segment environment. These data-element attributes can include roadway curvature, roadway classification (e.g., highway, urban, city, rural), number of lanes, roadway inclination, and some traffic control signage (e.g., speed, stop, etc.), and devices (e.g., traffic lights, light poles, etc.). Typically, these parameter elements are collected through extensive manual methods, such as skilled personnel traveling the roadways and noting the parameter value and entering the relevant information into database along with the GPS location. However, some other parameter elements can be estimated through other methods. For example, a roadway curvature parameter at the specific roadway coordinate can be estimated based upon processing several nearby discrete Global Positioning Satellite (GPS) roadway points and assigning a "spline" line segment that best represents the curvature.

However, once a roadway segment has been catalogued, it may be a very long period of time before that roadway segment is "updated/refreshed" to reflect possible alterations in the roadway segments (e.g., new roadway intersections and roads, re-zone roadway, new traffic control signage, and devices etc.). Typically, some events (such as temporary construction zone areas, inadvertent removal of signage due to crash events, theft, inoperable traffic control devices, etc.) would not be entered into the database.

Generally, when a customer acquires a navigation system, the navigation database already reflects "old" information. Typically, the navigation database only reflects the accuracy of the roadway segment at the time the information was collected, and does not reflect real-time current status of the roadway segment. Further, once the navigation system is acquired by a customer, the customer typically has to return to the seller (e.g., the dealership) to update the navigation database. Maintaining the accuracy of the navigation database to reflect "real-time" roadway status is difficult due to how the information is collected, and transferred to existing navigation databases.

### SUMMARY OF THE INVENTION

The present invention is related to a database system for obtaining and communicating data comprising a plurality of mobile nodes, wherein at least a first mobile node of said plurality of mobile nodes comprises an environmental data collection device configured to obtain environmental data adjacent said first mobile node, and a location determination device configured to determine a geographical location that is associated with said obtained environmental data, and a memory device configured to store said environmental data and said associated geographical location, and a processor in communicative connection with said environmental data collection device, said location determination device, and said memory device; and a communication device in communicative connection with said processor, and configured to transmit said environmental data and said associated geographical location to a database, wherein at least one of said database and said first mobile node is configured to categorize said environmental data and said associated geographical location, and communicate data that is a function of said environmental data and said associated geographical location to a second mobile node of said plurality of mobile nodes based upon said categorization. Furthermore, at least one of said database and said processor is configured to categorize said environmental data and associated geographical location as one of a first category and a second category, such that said environmental data and said associated geographical location that is categorized as said first category is communicated to said second mobile node of said plurality on nodes to update a memory device of said second mobile node, and said environmental data and said associated geographical location that is categorized as said second category is deleted. Said at least one mobile node further comprises a navigation system comprising said memory device, wherein said environmental data and said associated geographical location are adapted to function in said navigation system. Said location determination device is a global positioning satellite (GPS) system device that comprises at least a portion of a GPS system, such that said determined geographical location comprises GPS coordinates. Said location determination device is a cellular device that comprises a cellular network. At least one of said plurality of mobile nodes is a vehicle. Said environmental data collection device is an imager, such that said obtained environmental data comprises an image.Said environmental data collection device is an alcohol sensing device configured to detect a blood alcohol content of a user. Said communication device is a satellite communication device that comprises a satellite communication network.

The invention is also related to a method of obtaining and communicating data, said method comprising the steps of obtaining environmental data approximate a first mobile node;
determining a geographical location of at least one of said obtained environmental data and said mobile node, such that said environmental data is associated with said determined geographical location;
communicating data that is a function of said environmental data and said associated geographical location;
categorizing said environmental data and said associated geographical location; and communicating said environmental data and said associated geographical location to a second mobile node based upon said categorization. Also, said step of categorizing said environmental data and said associated geographical location further comprises the steps of:
categorizing said environmental data and said associated geographical location as one of a first category and a second category;
communicating said environmental data and said associated geographical location that is categorized as said first category to said second mobile node to update said second mobile node; and
deleting said environmental data and said associated geographical location that is categorized as said second category.
The method further comprises the step of providing a navigation device that comprises at least a portion of said first mobile node, wherein said environmental data and associated geographical location are adapted to function in said navigation device. Wherein said step of determining said geographical location further comprises determining global positioning satellite (GPS) system coordinates and wherein said step of obtaining environmental data further comprises obtaining an image and wherein said step of obtaining environmental data (354) further comprises obtaining a blood alcohol content of a person.

These and other features, advantages, and objects of the present invention will be further understood and appreciated by those skilled in the art by reference to the following specification, claims, and appended drawings.

### BRIEF DESCRIPTION OF THE DRAWINGS

The present invention will now be described, by way of example, with reference to the accompanying drawings, in which:

Fig. 1 is an environmental view of a database system, in accordance with one embodiment of the present invention;

Fig. 2 is a block diagram of a database system, in accordance with one embodiment of the present invention;

Fig. 3 is a flowchart illustrating a method of obtaining and communicating data, in accordance with one embodiment of the present invention;

Fig. 4A is a flowchart illustrating a method of categorizing environmental data and a geographical location, in accordance with one embodiment of the present invention;

Fig. 4B is a flowchart illustrating a method of categorizing environmental data and a geographical location, in accordance with an alternate embodiment of the present invention; and

Fig. 5 is a flowchart illustrating a method of obtaining and communicating data, in accordance with an alternate embodiment of the present invention.

### DESCRIPTION OF THE PREFERRED EMBODIMENT

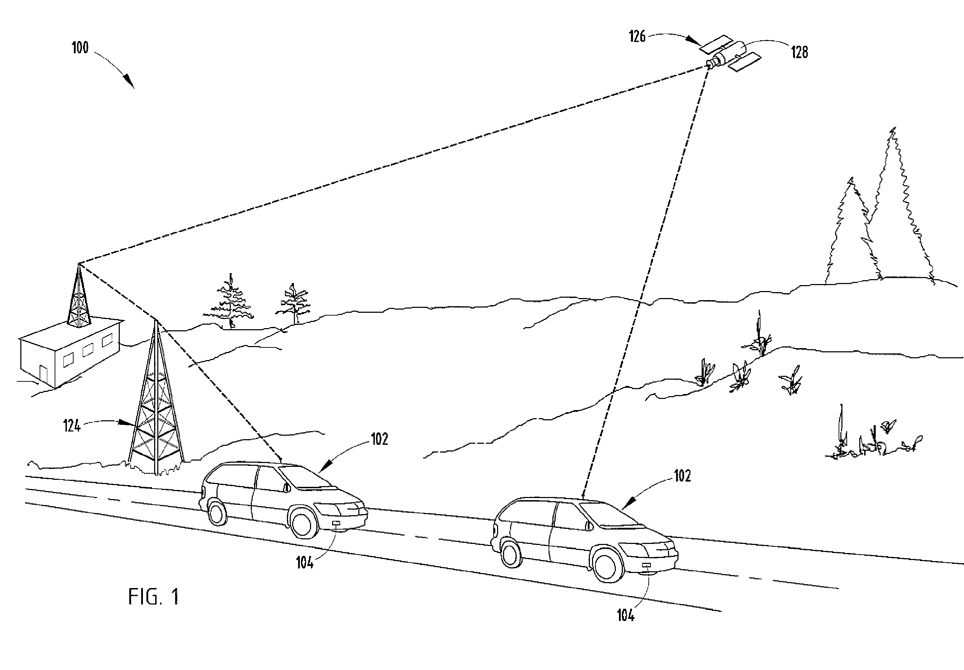

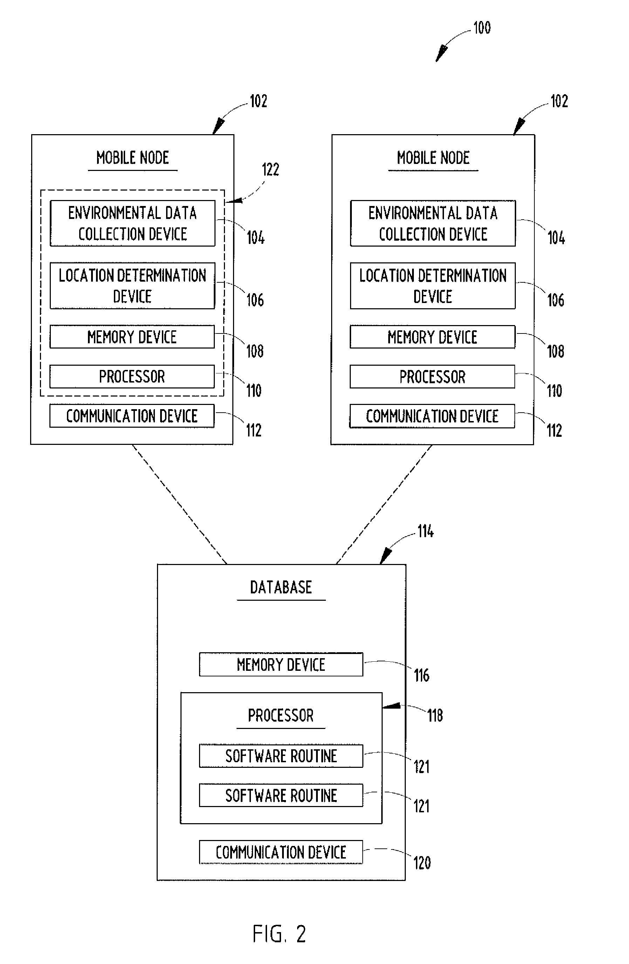

In regards to both Figs. 1 and 2, a database system for obtaining and communicating data is generally shown at reference identifier 100. The database system 100 includes a plurality of mobile nodes generally indicated 102, wherein at least a first mobile node includes an environmental data collection device 104 configured to obtain environmental data adjacent the first mobile node, and a location determination device 106 (Fig. 2) that is configured to determine a geographic location that is associated with environmental data obtained by the environmental data collection device 104. The first mobile device 102 further includes a memory device 108 configured to store at least the environmental data and the associated geographical location, and a processor in communicative connection with the environmental data collection device 104, the location determination device 106, and the memory device 108. The first mobile node 102 also includes a communication device 112 in communicative connection with the processor 110 and configured to transmit the environmental data and the associated geographical location to a database generally indicated at reference identifier 114 (Fig. 2). Typically, either the database 114 (e.g., the database 114 includes suitable electronic hardware and/or software for processing the received data) or the mobile node 102 (e.g., the processor 110, one or more executable software routines, other suitable electronic components, or a combination thereof) is configured to categorize the environmental data and the associated geographical location, and communicate data that is a function of the environmental data and the associated geographical location to a second mobile node of the plurality of nodes 102 based upon the categorization, as set forth in greater detail herein.

By way of explanation and not limitation, the database system 100 can obtain environmental data that includes data about the environment adjacent or approximate to the mobile node 102 (e.g., roadway information), and communicate the environmental data that is associated with a determined geographical location, such that the geographical location of the obtained environmental data is known. Thus, it can be determined if the environmental data in that particular determined geographical location is new. One exemplary embodiment is a navigation system, as described in greater detail below, such that environmental data (e.g., roadway information) and a geographical location (e.g., GPS coordinates) can be used to determine if the obtained environmental data is new as compared to the data already stored in the database 114, the memory device 116, or a combination thereof. Other exemplary embodiments are, but not limited to, determining whether a user of the mobile node 102 is performing an unlawful act, such as driving while intoxicated or speeding, as described in greater detail below. According to one embodiment, the obtained environmental data can be data relating to operating conditions of the mobile node 102, conditions relating to an environment adjacent or approximate to the mobile node 102, the like, or a combination thereof. Additionally or alternatively, the geographical data is associated with the obtained environment data, such that the geographical location of the mobile node 102 is determined, the geographical location of the obtained environmental data is determined, the like, or a combination thereof.

Generally, one of the database 114 or the first mobile node 102 is configured to categorize the environmental data and the associated geographical location as either a first category or a second category. According to one embodiment, when the environmental data and the associated geographical location is categorized as the first category, it is communicated to a second mobile node to update the memory device 108 of the second mobile node, and when the environmental data and the associated geographical location is categorized as the second category, it is deleted. Typically, the environmental data and associated geographical location that are obtained by the first mobile node are communicated to the database 114, and if it is categorized as the first category, then it is communicated to the other mobile nodes (e.g., the second mobile node). Alternatively, the first mobile node can be configured to obtain and categorize the environmental data and associated geographical location, and communicate it if it is categorized as the first category. It should be appreciated by those skilled in the art that the system 100 can include both the first mobile node and the database 114 being configured to categorize the environmental data and the associated geographical location as one of a first category or a second category. It should further be appreciated by those skilled in the art that in an embodiment wherein the first mobile node categorizes the environmental data and the associated geographical location, the first mobile node can communicate the environmental data and associated geographical location categorized as the first category directly to the second mobile node.

According to one embodiment, the environmental data and geographical location is categorized as the first category, when it is determined that the obtained environmental data is something new or something that is not previously stored in the memory device 108 of the mobile node 102 or a memory device 116 (Fig. 2) of the database 114. Alternatively, the environmental data and associated geographical location can be categorized as the first category when data that is a function of the environmental data and the associated geographical location is above a threshold value, as described in greater detail below. Typically, as shown in Fig. 2, the database 114 includes the memory device 116, a processor generally indicated at 118, and a communication device 120 that is configured to communicate with the communication device 112 of the mobile nodes 102. The processor 118 can be configured to execute one or more executable software routines.

According to one embodiment, at least one mobile node 102 includes a navigation system generally indicated at 122 (Fig. 2) that includes the location determination device 106, the memory device 108, the processor 110, a communication device 112, the like, or a combination thereof. In one exemplary embodiment, as illustrated in Fig. 2, the navigation system 122 includes the location determination device 106, the memory device 108, and the processor 110. In such an embodiment, the environmental data and the associated geographical location are adapted to function in and/or with the navigation system 122. Typically, the location determination device 106 is a global positioning satellite (GPS) system device that includes at least a portion of the GPS system, such that the determined geographical location includes GPS coordinates. Additionally, the environmental data collection device 104 can be an imager, such that as the mobile node 102 travels along geographic locations (e.g., the mobile node 102 being a vehicle (Fig. 1) traveling along a roadway) the imager obtains images of environmental conditions adjacent to mobile node 102, and the location determination device 106 can determine the location relative to the mobile device, GPS coordinates of the mobile node 102, an approximate location of the imaged object or objects relative to the mobile node 102 and the GPS coordinates thereof, or a combination thereof. Thus, it can be determined if the imaged objects are new and should be stored in the navigation system 122 to update the system, or whether the imaged objects are already stored within the navigation system 122.

According to one embodiment, an approximate location of an object or objects captured in the image can be determined relative to the function of the mobile node 102. Thus, if GPS coordinates of the mobile node 102 are determined by the location determination device 106, an approximate location of the object or objects can be determined by angles and distance of the object or objects in the image relative to the mobile node 102. It should be appreciated by those skilled in the art that the approximate location of the object or objects in the image can be determined in other suitable ways relative to a known location.

For purposes of explanation and not limitation, in operation, the mobile node 102 can be a vehicle, such that as the vehicle travels down a road, the environmental data collection device 104 (e.g., an imager) can image a new street and the approximate location of the new street can be determined by the location determination device 106. The image and the GPS coordinates and/or determined approximate location can then be communicated to the database 114, wherein it is determined if the imaged street and associated GPS coordinates are new data or old data (e.g., that is already standard in the navigation system 122 and/or the database 114). If it is determined that the image and associated GPS coordinates are new (i.e., categorized as the first category) then data that is a function of the image and the associated GPS coordinates is communicated to another mobile device of the plurality of mobile nodes 102 to update the navigation system 122 and/or the memory device 108 contained therein.

According to an alternate embodiment, the location determination device 106 is a wireless device, such as, but not limited to, a cellular device, other suitable wireless devices, the like, or a combination thereof, that is included in a wireless network generally indicated at 124 (Fig. 1), such that the cellular network 124 is configured to triangulate the location of the mobile node 102. However, it should be appreciated by those skilled in the art that other suitable location determination devices 106 using coordinates or triangulation can be used to determine the location of the mobile nodes 102.

Additionally or alternatively, the communication device 112 of the mobile node 102, the communication device 120 of the database 114, or a combination thereof can be satellite communication devices that are included in a satellite communication network, generally indicated at 126 and including at least one satellite 128, such that the obtained environment data and associated geographical location and the data that is a function of the environmental data and the associated geographical location is communicated between the plurality of mobile nodes 102 and the database 114 via the satellite communication network 126. It should also be appreciated by those skilled in the art that the communication devices 112, 120 can be other suitable communication devices that use wireless communications, such as, but not limited to, the cellular network 124, or that the system 100 can include a combination of different types of communication devices.

The system 100 can use the environmental data collection device 104, the location determination device 106, the memory device 108, the processor 110, and the communication device 112 of the mobile node 102, the memory device 116, the processor 118, and the communication device 120 of the database 114, or a combination thereof to collect environmental data and obtain an associated geographical location, to form a mobile node-to-infrastructure (e.g., the database 114) connectivity (e.g. communication devices 112, 120) to provide substantially real-time information updates of data-elements that describe environmental data, such as, but not limited to, roadway segments of a navigation map database and other roadway features not currently included in the database, according to one embodiment. Thus, intelligent imaging processing algorithms (e.g., one or more executable software routines 121) can classify a variety of environmental conditions, such as, but not limited to, travel control signage and devices, signal, roadway information such as bridge or tunnel height, railway crossing, road exit or entry, curves, temporary signage for construction zones or detours, roadway classification, such as lanes, tunnel, bridge, curvature, guardrail, light poles, lane markers, street names, traffic control operations, or a combination thereof. Each mobile node 102 can upload the environmental data and the associated geographical location to the database 114 for further processing and corrective action notification to appropriate organizations.

It should be appreciated that the processing and categorization of the environmental data and associated geographical location can additionally or alternatively be performed by the mobile node 102, in accordance with an alternate embodiment. In such an embodiment, the processor 110 can include one or more executable software routines, such as, but not limited to, an executable software routine similar to the software routine 121.

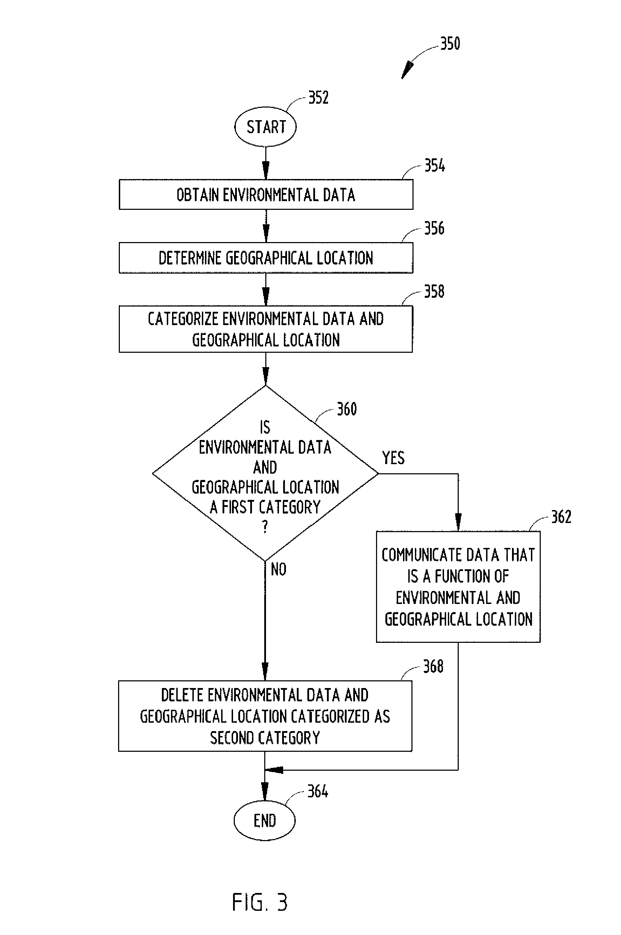

In regards to Figs. 1-3, a method of obtaining and communicating data is generally shown in Fig. 3 at reference identifier 350. The method 350 starts at step 352 and proceeds to step 354, wherein the environmental data is obtained. Typically, the environmental data can be obtained by the environmental data collection device 104 (Figs. 1 and 2), as described in greater detail herein. At step 356, the geographical location of the obtained environmental data is determined. As described in greater detail herein, the geographical location can be determined by the location determination device 106 (Figs. 1 and 2). At step 358, the environmental data and associated geographical location are categorized.

The method 350 then proceeds to decision step 360, wherein it is determined if the environmental data and the associated geographical location are a first category. If it is determined at decision step 360 that the environmental data and the associated geographical location are categorized as the first category, then the method 350 proceeds to step 362, wherein data that is a function of the environmental data and associated geographical location are communicated, and the method 350 then ends at 364. Typically, the communication of the data that is a function of the environmental data and the associated geographical location can be communicated using the communication devices 112, 120 (Fig. 2).

However, if it is determined at decision step 360 that the environmental data and the associated geographical location are not categorized as a first category, then the method 350 proceeds to step 368. At step 368, the environmental data and the associated geographical location that are categorized as the second category are deleted, and the method 350 ends at step 364.

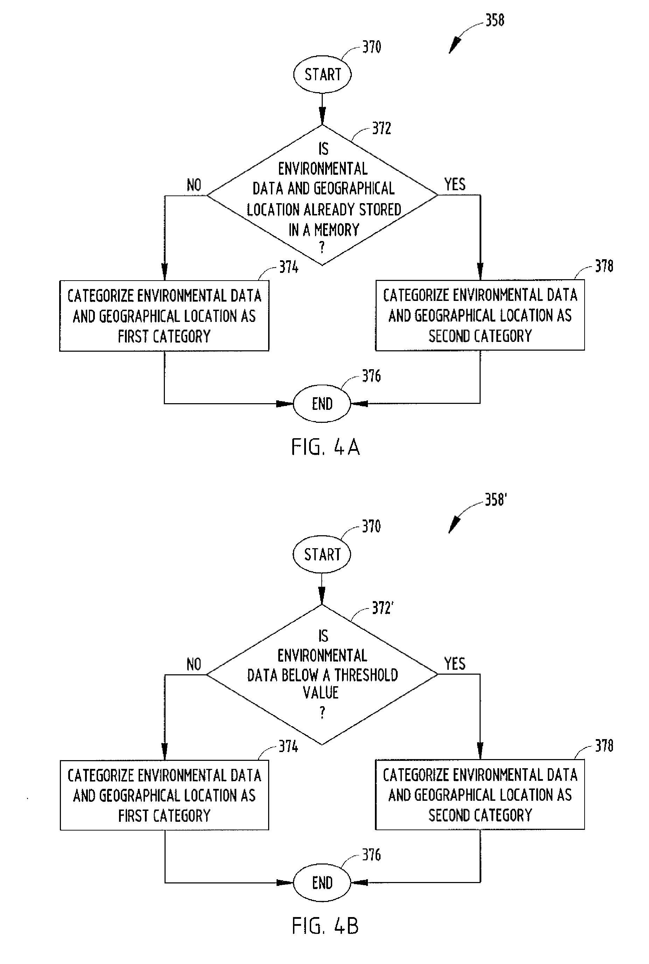

According to one embodiment, step 358 of the method 350, wherein the environmental data and the associated geographical location are categorized, is generally shown in Fig. 4A as method 358. The method 358 starts at step 370, and proceeds to decision step 372, wherein it is determined if the environmental data and the associated geographical location are already stored in a memory, such as, but not limited to, memory device 108 of the mobile node 102, the memory device 116 of the database 114, the like, or a combination thereof If it is determined in decision step 372 that the environmental data and associated geographical location are not already stored in a memory device (e.g., memory device 108 and/or memory device 116), then the method 358 proceeds to step 374. At step 374, the environmental data and the geographical location are categorized as a first category, and the method 358 ends at step 376, such that the method 350 would proceed to decision step 360 (Fig. 3).

However, if it is determined at decision step 372 of method 358 that the environmental data and the associated geographical location are already stored in a memory (e.g., memory device 108 and/or memory device 116), then the method 358 proceeds to step 378. At step 378, the environmental data and the associated geographical location are categorized as a second category, and the method 358 then ends at step 376, such that the method 350 would proceed to decision step 360 (Fig. 3).

In accordance with an alternate embodiment, the step 358 of method 350 is generally shown in Fig. 4B as method 358'. In such an embodiment, the system 100 (Figs. 1 and 2) and method 350 can be used to determine if a user of the mobile node 102 (e.g., a vehicle) is performing an unlawful or undesirable act, such as, but not limited to, intoxicated, speeding, going through a stop sign/or red light, the like, or a combination thereof, such that the environmental data obtained by the environmental data collection device 104 (Figs. 1 and 2) is a blood alcohol content (BAC) measurement, a speed measurement (e.g., using a speedometer), or an image of a stop sign and speed measurement, wherein the obtained environmental data can be compared to a threshold value. The method 358' starts at step 370, and proceeds to decision step 372', wherein it is determined if the environmental data is below a threshold value. If it is determined at decision step 372' that the environmental data is not below a threshold value, then the method 358' proceeds to step 374. At step 374, the environmental data and the associated geographical location are categorized as a first category, and the method 358' then ends at step 376, such that the method 350 would proceed to decision step 360 (Fig. 3).

However, if it is determined at decision step 372' that the environmental data is below a threshold value, then the method 358' proceeds to step 378. At step 378, the environmental data and the associated geographical location are categorized as a second category, and the method 358' then ends at step 376, such that the method 350 would proceed to decision step 360 (Fig. 3).

According to one embodiment, the system 100 (Figs. 1 and 2) and method 350 (Fig. 3) are used with the navigation system 122, wherein the environmental data and associated geographical location are categorized by determining if the environmental data and associated geographical location are already stored in the navigation system 122, and whether the environmental data should be used as an update (e.g., a conflict resolution). Thus, the conflict identification and resolution between the environmental data stored in the memory device 108, the memory device 116, or a combination thereof can be used in substantially real-time, using the environmental data and associated geographical location provided by multiple mobile nodes 102. Typically, the database 114 identifies a conflict and resolves the conflict, such that there can be identification of new information to form or update navigation/map systems, identification of missing traffic control signage information and automatic notification to local authorities for examination and correction, identification of an in-operable traffic control signal and automatic notification to local authorities for examination and correction, identification of worn or confusing markers and automatic notification to local authorities for examination and correction identification of unlawful or undesirable acts and automatically notify to local authorities for examination and correction, the like, or a combination thereof Thus, the updated data that is a function of the obtained environmental data and associated geographical location can be downloaded to other mobile nodes 102 as an update, be transmitted to local authorities, or a combination thereof. It should be appreciated by those skilled in the art that one or more of the plurality of mobile nodes 102 can be configured to identify and/or resolve a conflict.

By way of explanation and not limitation, a conflict resolution can be included in decision step 360 of the method 350. Thus, not only can it be determined at decision step 360 whether the environmental data and geographical location is a first category based upon data collected by a single mobile node 102, but the decision step 360 can be performed based upon data collected by multiple mobile nodes 102. In such an embodiment, the number of mobile nodes 102 that report data and a time period for obtaining the data can be used for conflict resolution. It should be appreciated by those skilled in the art that additional data can be used in the conflict resolution.

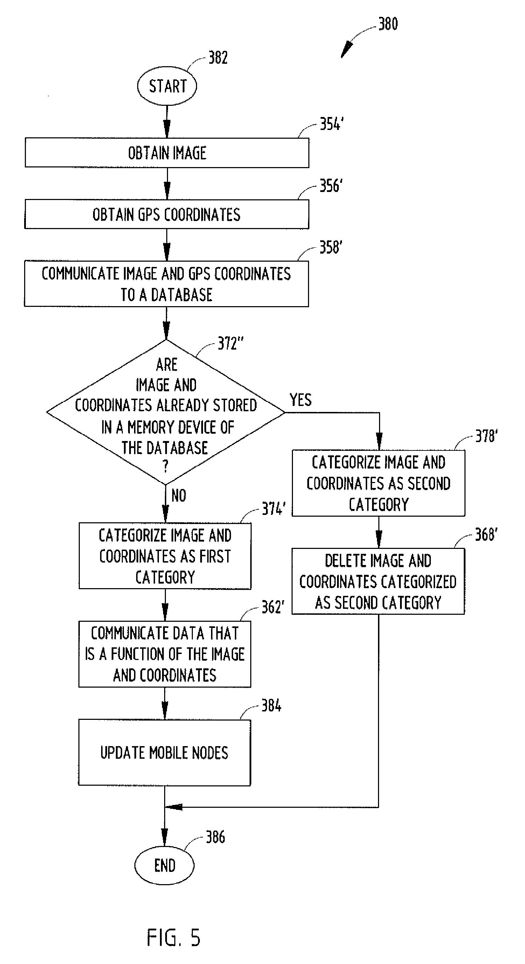

As to Figs. 1, 2 and 5, a method of obtaining and communicating data, when the mobile node 102 includes the navigation system 122 is generally shown in Fig. 5 at reference identifier 380. The method 380 starts at step 382, and proceeds to step 354', wherein an image is obtained. In such an embodiment, the environmental data collection device 104 is an imager, so that the collected environmental data is an image of an environment adjacent the mobile node (e.g., a vehicle). At step 356', the GPS coordinates are obtained, and at step 358', the image and associated GPS coordinates are communicated to the database 114. In such an embodiment, the location determination device 106 is a GPS device that is utilized in the navigation system 122.

The method 380 then proceeds to decision step 372", wherein it is determined if the image and associated GPS coordinates are already stored in the memory device 116 of database 114. If it is determined at decision step 372" that the image and associated GPS coordinates are not are already stored in the memory device 116 of the database 114, then the method 380 proceeds to step 374'. At step 374', the image and associated GPS coordinates are categorized as the first category. Then, at step 362', data that is a function of the image and associated GPS coordinates that were categorized as the first category are communicated to other mobile nodes of the plurality of mobile nodes 102. At step 384, the mobile nodes 102 are updated by receiving the communicated data, which is a function of the image and associated GPS coordinates. The method 380 then ends at step 386.

However, if it is determined at decision step 372" that the image and associated GPS coordinates are already stored in the database 114, then the method 380 proceeds to step 378'. At step 378', the image and associated GPS coordinates are categorized as the second category. The method 380 then proceeds to step 368', wherein the image and the associated GPS coordinates that are categorized as the second category are deleted, and the method 380 then ends at step 386.

According to an alternate embodiment, the environmental collection data device 104 can be an alcohol sensing device, such that a blood alcohol content or BAC of a user, such as, but limited to, a breathalyzer, can be determined, and such data along with an associated geographical location can be transmitted to the database 114, local authorities, or a combination thereof. Exemplary alcohol sensing devices are described in commonly assigned U.S. Patent Application Publication No. 2007/0077176 entitled "TRACER TO COMPENSATE FOR ENVIRONMENTAL VARIATIONS THAT INFLUENCE A CHEMICAL VAPOR SENSOR MEASUREMENT," U.S. Patent Application Publication No. 2006/0154377 entitled "CHEMICAL VAPOR SENSOR," U.S. Patent No. 7, 279,132 entitled "CHEMICAL VAPOR SENSOR HAVING AN ACTIVE AND A PASSIVE MEASURENT MODE," and U.S. Patent No. 7,095,501 entitled "ETHYL ALCOHOL SENSOR AND METHOD OF USE," the entire disclosures being hereby incorporated herein by reference. Additionally or alternatively, the environmental data collection device 104 can monitor vehicle operating conditions, such as, but not limited to, speed of the mobile node 102 or going through a stop sign/or red light. In such an embodiment, when the speed of the mobile node 102 exceeds a threshold value, the communication device can communicate the data obtained by the environmental data collection device 104 and associated geographical location to the database 114, local authorities, or a combination thereof.

Advantageously, the system 100 and methods 350 and 380 can provide for substantially real-time updates of information. These updates can improve roadway safety by providing the most up-to-date information to a driver and automatic notification to local government authorities about roadway irregularities or other obtained environmental data. Additionally, the communicated data can provide information as to operating conditions of the mobile node 102 or the user of the mobile node 102. It should be appreciated by those skilled in the art that the system 100 and methods 350 and 380 may include additional or alternative advantages. Further, it should be appreciated by those skilled in art that the above described elements and steps of the system 100 and methods 350 and 380 can be combined in alternative ways, not explicitly described herein.

## Claims

1. A database system (100) for obtaining and communicating data comprising:
a plurality of mobile nodes (102), wherein at least a first mobile node of said plurality of mobile nodes comprises:
an environmental data collection device (104) configured to obtain environmental data adjacent said first mobile node;
a location determination device (106) configured to determine a geographical location that is associated with said obtained environmental data;
a memory device (108) configured to store said environmental data and said associated geographical location;
a processor (110) in communicative connection with said environmental data collection device (104), said location determination device (106), and said memory device (108); **characterized in that** the system (100) further comprises
a communication device (112) in communicative connection with said processor (110), and configured to transmit said environmental data and said associated geographical location to a database (114), wherein at least one of said database (114) and said first mobile node is configured to categorize said environmental data and said associated geographical location, and communicate data that is a function of said environmental data and said associated geographical location to a second mobile node of said plurality of mobile nodes (102) based upon said categorization.

2. The database system (100) of claim 1, wherein at least one of said database (114) and said processor (110) is configured to categorize said environmental data and associated geographical location as one of a first category and a second category, such that said environmental data and said associated geographical location that is categorized as said first category is communicated to said second mobile node of said plurality on nodes (102) to update a memory device (108) of said second mobile node, and said environmental data and said associated geographical location that is categorized as said second category is deleted.

3. The database system (100) of claims 1 or 2, wherein said at least one mobile node further comprises a navigation system (122) comprising said memory device (108), wherein said environmental data and said associated geographical location are adapted to function in said navigation system (122).

4. The database system (100) as set in any of the preceding claim, wherein said location determination device (106) is a global positioning satellite (GPS) system device that comprises at least a portion of a GPS system, such that said determined geographical location comprises GPS coordinates.

5. The database system (100) as set in any of the preceding claim, wherein said location determination device (106) is a cellular device that comprises a cellular network.

6. The database system (100) as set in any of the preceding claim, wherein at least one of said plurality of mobile nodes (102) is a vehicle.

7. The database system (100) as set in any of the preceding claim, wherein said environmental data collection device is an imager, such that said obtained environmental data comprises an image.

8. The database system (100) as set in any of the preceding claim, wherein said environmental data collection device is an alcohol sensing device configured to detect a blood alcohol content of a user.

9. The database system (100) as set in any of the preceding claim, wherein said communication device (112) is a satellite communication device that comprises a satellite communication network.

10. A method (350) of obtaining and communicating data, said method (350) comprising the steps of:
obtaining environmental data (354) approximate a first mobile node (102);
determining a geographical location (356) of at least one of said obtained environmental data and said mobile node (102), such that said environmental data is associated with said determined geographical location;
communicating data that is a function of said environmental data and said associated geographical location;
categorizing (352) said environmental data and said associated geographical location; and
communicating said environmental data and said associated geographical location to a second mobile node based upon said categorization.

11. The method (350) of claim 10, wherein said step of categorizing (358) said environmental data and said associated geographical location further comprises the steps of:
categorizing said environmental data and said associated geographical location as one of a first category and a second category;
communicating said environmental data and said associated geographical location that is categorized as said first category to said second mobile node to update said second mobile node; and
deleting said environmental data and said associated geographical location that is categorized as said second category.

12. The method (350) of claims 10 or 11 further comprising the step of providing a navigation device that comprises at least a portion of said first mobile node (102), wherein said environmental data and associated geographical location are adapted to function in said navigation device.

13. The method (350) of claims 10 or 11, wherein said step of determining said geographical location further comprises determining global positioning satellite (GPS) system coordinates.

14. The method (350) of claims 10 or 11, wherein said step of obtaining environmental data (354) further comprises obtaining an image.

15. The method (350) of claims 10 or 11, wherein said step of obtaining environmental data (354) further comprises obtaining a blood alcohol content of a person.
